# EUROPEAN PATENT APPLICATION

(11) **EP 1 130 173 A1**
(43) Date of publication of application: **05.09.2001**
(21) Application number: 01200732.4
(22) Date of filing: 22.02.2001
(51) Int. Cl.: E02B 17/02, E04H 12/34, F03D 11/04

(54) **Method and apparatus for erecting a construction at sea**

(30) Priority: 22.02.2000 NL 1014463
(71) Applicant: N.V. Kema, 6812 AR Arnhem (NL)
(72) Inventor: Semplonius, Hendrik, 6957 AN Laag Soeren (NL); Hutting, Hendrikus Kornelis, 6602 XA Wijchen (NL); Rikken, Jacobus Fredericus, 6922 NE Duiven (NL)
(74) Representative: Eveleens Maarse, Pieter

(57) **Abstract**

The invention relates to a method for locating a pylon (1) at sea, in particular a pylon with a wind turbine located thereon, and comprising the following steps:
- erecting the pylon on a location on land which is within reach of a vehicle (11);
- locating the pylon on the vehicle;
- driving the vehicle with the pylon into the sea to the required position of the pylon over the sea bed for at least a substantial part of the path; and
- fixing the pylon on a foundation.

Further, the invention relates to a vehicle for transporting a construction from a location on land to a location at sea, whereby the transport means comprise a vehicle (11) which is adapted to move over the sea bed.

The stability is obtained because the transport takes place over the sea bed, and the stability is independant from the interface between water and air, being strongly influenced by the weather, and which provides the stability when floating means are used.

## Description

The invention relates to a method for establishing a construction at sea, like pylons. It is known to establish constructions like oil rigs at sea by use of ships, pontoons or other floating platforms.

This requires the use during longer periods of such means, whereas the use of those means is subject to influences of the sea like waves, wind, etcetera.

From the article 'Structural and Economic Optimalisation of OWEC Support Structure: Contribution to the Joule III Project Opti-OWECS', in 'Wind Engineering' Vol.21 No.5 1997, pages 339-350, by Marray Ferguson, a method is known in which a pylon is built in a dry dock, is being transported to its target position by means of floating means and is sunk down there.

This method involves a lot of capital by using a dock over a long time period, and is besides subject to influences of the weather; only with a limited wind force it is possible to locate a large vertical construction with a high centre of gravity.

The aim of the invention is to provide such a method which makes use of capital goods during a shorter period and which can also be executed at less favourable weather.

This aim is reached by such a method comprising the following steps:
- erecting the pylon on a location on land which is within reach of a vehicle
- picking up the pylon by the transport vehicle or locating the pylon on the transport vehicle with other hoisting means.
- driving the vehicle with the pylon into the sea to the required position of the pylon over the sea bed; and
- fixing the pylon on a foundation by the vehicle.

This method eliminates the prolonged use of a dry dock for the construction of the pylon, the use of floating means and a tug for transport of the pylon and a crane ship or a floating lift for installation of the pylon. Of course the method of the invention requires the use of a costly vehicle, but this is only in use during short periods for installing the pylon.

Perhaps more important is the advantage of independence from the weather. Also with a strong wind and high waves the method according to the invention can be used. Indeed the stability is obtained by driving over the sea bed and the stability is thus independent from the interface between water and air being strongly influenced by the weather, and which provides the stability when floating means are used.

This transport can take place easily as the width of the vehicle makes the vehicle sufficiently stable. It is not imperative that the vehicle itself has a high weight.

Another advantage of this method is that installation can take place in a very short time; when the foundations have been provided under water it is easy to drive a pylon completely with turbine and generator erected for instance on the beach over the sea bed to its location with this vehicle and to install it on the foundations within one day.

When the sea bed is extremely uneven it is possible to plane the sea bed over at least the path over which the transport vehicle moves prior to the transport of the pylon.

It is also possible, when for instance the sea bed is impossible to drive over that the vehicle passes a part of the path floatingly.

The present invention also relates to a vehicle which is adapted to move a construction from a location on land to a location at sea.

It is known to use ships, pontoons or other floating constructions or helicopters for installing constructions on oil rigs.

As elucidated above the use of such apparatuses is highly sensitive to the weather.

The aim of the invention is to provide such an apparatus which is hardly or not at all sensitive to the weather. This aim is reached in that the vehicle is adapted to move along the sea bed.

As this use leads to a stable connection between the sea bed and the construction the construction becomes insensible to waves.

According to a first embodiment, the vehicle comprises a frame, carrying means for carrying the pylon to be transported and vertical moving means for moving the carrying means in vertical direction.

In this embodiment the carrying means are adapted for carrying the pylon and to lift the pylon over a short distance. Thus the pylon comes free from the ground so that it can be transported in substantial horizontal direction.

Of course there are several possibilities to carry the pylon. It is for instance possible to move a kind of wigs between the feet of the pylon and to lift the pylon therewith. The pylon should be fixed to avoid falling over or shifting. Another possibility comprises the mutual fixation of the carrying means and the pylon by pegs, braces, bolt or other fixing means. After fixation the carrying means are lifted to make the pylon free from the ground.

Herein the lifting means removable in substantial vertical direction relative to the to frame. It is of course also possible to let the frame move in the vertical direction relative to the wheels or the tracks onto which the vehicle rests.

According to another embodiment the vehicle has a U-shaped configuration.

In the common configuration of four legs arranged according to a rectangle this feature offers the possibility to bring a part of the frame in the vicinity of each of the four legs of the construction, without providing the frame of removable parts. Besides the frame may extend to the outer side of the legs so that a greater stability of the combination of pylon and vehicle is obtained.

According to another embodiment the transport vehicle comprises tracks.

Tracks are very efficient for transporting heavy loads over uneven surfaces.

According yet another embodiment the transport vehicle comprises wheels.

The application of a large number of wheels offers the possibility to obtain good driving properties during driving over rough terrain like the sea bed. To compensate for the upward force, the wheels have been provided with tyres filled with liquid.

Preferably use is made of diesel-hydraulic or diesel-electric traction for the vehicle.

To drive the vehicle it comprises a cabin which of course should always be above the sea level. To realise this in different water depths and to make the cabin not extremely high on land, the height of the cabin is adjustable for instance through a hydraulic cylinder, possibly in combination with a lever construction.

Of course it is possible to control the vehicle from a ship a helicopter or from land. Therefor the vehicle can be controllable remotely, for instance through radio. Then it is important that the vehicle comprises cameras, in particular for displaying the situation on the sea bed. This is of course also possible when the vehicle comprises a controlling cabin.

Subsequently the present invention will be elucidated with the help of the figures, in which:
figure 1 shows perspective view of a trussed pylon which is installed on its location by means of a method according to the present invention,
figure 2: shows a schematic view of an embodiment of a vehicle to be used with the method according to the present invention; and
figure 3 shows a schematic view of a variation of the vehicle depicted in figure 2.

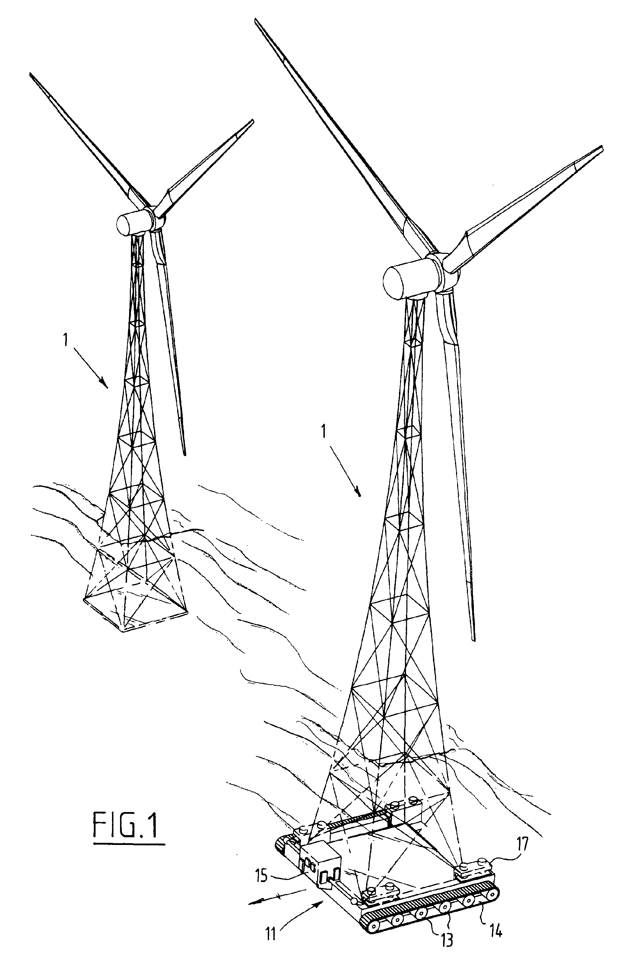

In figure 1 it is shown how a construction like for instance a trussed pylon for a wind turbine is transported driving over the sea bed. Such a situation develops when pylons with wind turbines have to be installed at sea. Because of the weather it is attractive to locate wind turbines at sea. To be able to construct economicly such pylons have often a great height, often of several tens of meters, in which the rotors also have a diameter of several tens of meters.

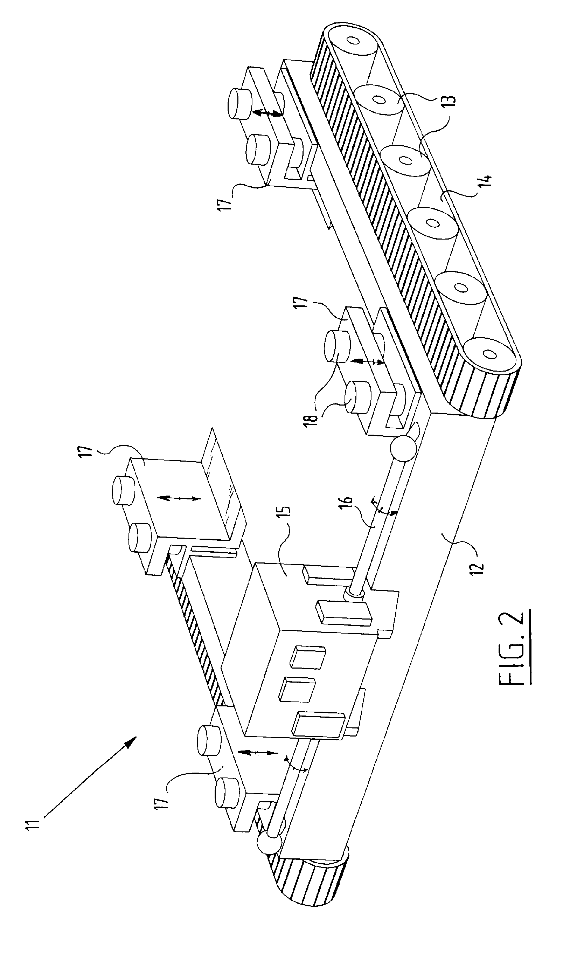

To transport a pylon 1 in its erected situation to its destination, use is made of a vehicle 11 driving over the sea bed. This vehicle is depicted in its whole in figure 2. The vehicle comprises a U-shaped frame 12, at the side whereof carrying roles 13 have been provided, around which a track 14 has been applied. At least one of the carrying roles 13, is driven by means of an engine 15 which is connected with the carrying roller 13 by means of a shaft 16.

Further, the vehicle comprises carrying hooks 17 moveable in vertical direction, which hooks are used for lifting and lowering the construction to be transported. Therefor lifting means 18 have been applied, for instance in the shape of hydraulicly driven cylinders. The whole has been made watertight to be able to drive under water.

Of course it is possible to make numerous variations on this construction; it is for instance possible to use a frame with a different shape, to use a drive unit of another kind, to use wheels instead of tracks in which the tyres of the wheels can be filled with liquid instead of with air, whereas the control can be embodied differently.

Further, the vehicle can be comprised of a cabin which can be moved until above the water level. This cabin can be used for controlling the vehicle or to gain access to the pylon for instance for maintenance or repair, whereas also a jetty can be provided moveable above the water level or until above the water level to be able to gain access to the vehicle with a boat when it is at sea. Of course it is possible to make the cabin moveable until below the water level; it will have to be made watertight then.

However, it is possible to make use of remote control, for which preferably cameras haven been provided on the vehicle to be able to see along which path the vehicle moves.

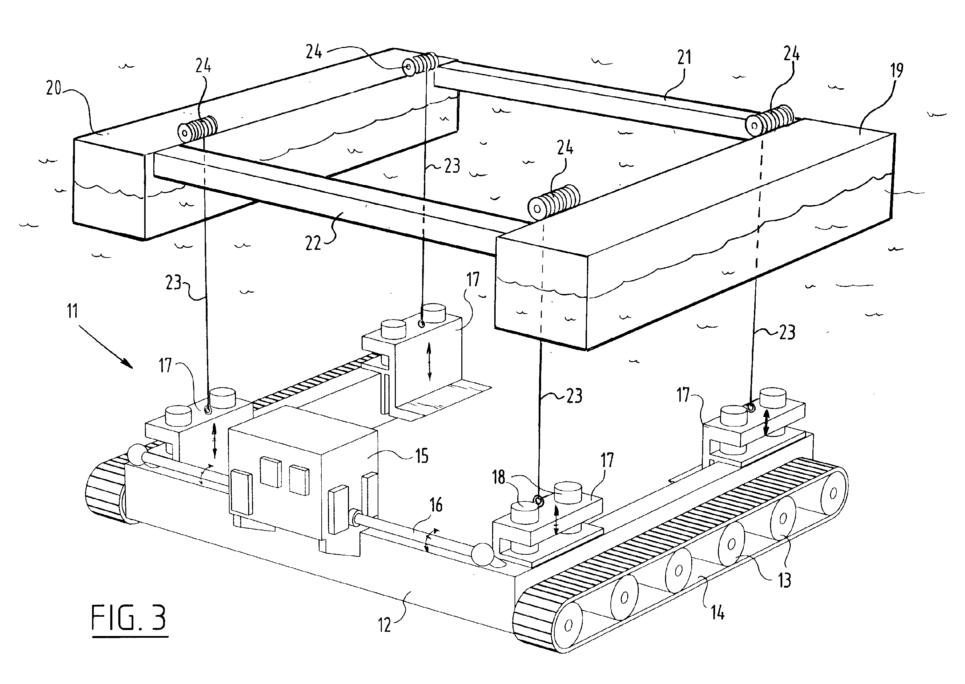

Figure 3 is a variation of an embodiment depicted in figure 2. The embodiment depicted in figure 3 comprises to floating bodies 19, 20, which are mutually connected through two trusses 21 and 22. The pylon to be transported extends through the space enclosed by the floating bodies 19, 20 and the trusses 21 and 22.

To convey the upward directed forces from the floating bodies to the frame of the vehicle cables 23 have been provided which are connected to the carrying hooks 17 of the frame. At the upper end the cables 23 are each connected with a whinch put on the floating bodies 19 and 20. These whinches serve to shorten or to lenghten the cables in dependence of the depth of the water.

It wil be clear that with this variation it is possible to limit the pressures exerted on the sea bed, so that it is possible to drive over sea or lake bottoms which are less heavinly loaded. It is even possible, for instance with a rocklike or a bottom which is otherwise impossible to drive over, to let the complete unit of the vehicle, the pylon suspended therein and the floating bodies to let it float completely. Of course the floating bodies should be dimensioned therefore.

It is also possible to provide the floating bodies with trussed means. Also it is possible to transport the whole by means of for instance a tug.

## Claims

1. Method for establishing a pylon at sea, in particular a pylon with a wind turbine located thereon, **characterized by** the following steps:
- erecting the pylon on a location on land which is within reach of a vehicle;
- locating the pylon on the vehicle;
- driving the vehicle with the pylon into the sea to the required position of the pylon over the sea bed for at least a substantial part of the path; and
- fixing the pylon on a foundation.

2. Method as claimed in claim 1, **characterized in that** the pylon is located on the vehicle by picking the pylon up by the vehicle.

3. Method as claimed in claim 1 or 2, **characterized in that** the sea bed is smoothened over at least a part of the path of the vehicle during transport prior to the transport.

4. Method as claimed in claim 1, 2 or 3, **characterized in that** a part of the path is travelled over in a floating condition.

5. Transport means for transporting a construction from a location on land to a location at sea, **characterized in that** the transport means comprise a vehicle which is adapted to move over the sea bed.

6. Vehicle as claimed in claim 5, **characterized by:** a frame, carrying means for carrying the pylon to be transported and vertical moving means for moving the carrying means in vertical direction.

7. Vehicle as claimed in claim 6, **characterized in that** the frame has a U-shaped configuration.

8. Vehicle as claimed in claim 5, 6 or 7, **characterized in that** the vehicle comprises tracked wheels.

9. Vehicle as claimed in claim 5 6 or 7, **characterized in that** the vehicle comprises wheels filled with a liquid.

10. Vehicle as claimed in any of the claims 5-8, **characterized in that** the vehicle comprises air chambers.

11. Vehicle as claimed in any of the claims 4-10 **characterized in that** the vehicle comprises auxiliary floating bodies.

12. Vehicle as claimed in any of the claims 5-11 , **characterized in that** the vehicle comprises a diesel-hydraulic driving unit.

13. Vehicle as claimed in any of the claims 5-12, **characterized in that** the vehicle comprises a cabin adjustable in height.

14. Vehicle as claimed in any of the claims 5-13, **characterized in that** the vehicle is remote controlled.
